# EUROPÄISCHE PATENTANMELDUNG

(11) **EP 3 421 103 A1**
(43) Veröffentlichungstag der Anmeldung: **02.01.2019**
(21) Anmeldenummer: 18179459.5
(22) Anmeldetag: 25.06.2018
(51) Int. Cl.: A62C 3/00, A62C 3/07, A62C 3/08, A62C 99/00, A62C 2/04, A63H 27/00, B64C 1/12, B64C 3/26

(54) **VERFAHREN ZUR VERMEIDUNG EINES AUSBREITENS VON BRÄNDEN BEI FLUGGERÄTEN UND/ODER TEILEN DAVON**

(30) Priorität: 26.06.2017 DE 102017114095; 30.06.2017 DE 102017114648; 07.07.2017 DE 102017115209
(71) Anmelder: Lanitz, Siegfried, 06237 Leuna OT Kötschlitz (DE)
(72) Erfinder: Lanitz, Siegfried, 06237 Leuna OT Kötschlitz (DE)
(74) Vertreter: Hertin und Partner Rechts- und Patentanwälte PartG mbB

(57) **Zusammenfassung**

Die Erfindung betrifft ein Verfahren zur Vermeidung eines Ausbreitens von Bränden bei Fluggeräten und/oder Teilen davon.

## Beschreibung

Die Erfindung betrifft ein Verfahren zur Vermeidung eines Ausbreitens von Bränden bei Fluggeräten und/oder Teilen davon.

### Stand der Technik:

Insbesondere bei Leichtflugzeugen, bei denen es sich im Sinne der Erfindung bevorzugt um Flugzeuge bis 5,7 t Abfluggewicht handelt und die im Kontext dieser Erfindung auch als "kleine Luftfahrt" bezeichnet werden, ist der Brandschutz ein hochaktuelles Thema, da gerade bei Flugzeugen in dieser Gewichtsklasse, die beispielsweise einen, zwei oder vier Sitze umfassen, die Piloten und/oder Insassen bei Abstürzen häufig in ihren Maschinen verbrennen und so zu Tode kommen. Ein Leichtflugzeug im Sinne der Erfindung kann Rahmensysteme umfassen, die zum Beispiel aus Holz, Aluminium, Stahl, Glasfaserkunststoffen oder kohlenstofffaserverstärkten Kunststoffen bestehen.

Ein Grund für diese Problematik der kleinen Luftfahrt sind Produkttechniken für die Flugzeuge und ihre Bestandteile, die zum Teil noch aus der Zeit des ersten Weltkriegs entstammen. Üblicherweise werden der Rahmen oder Teile des Rahmens des Flugzeugs mit einem Bespanngewebe oder -material überzogen. Dabei werden Stoffe, seien es natürliche Gewebe, wie Baumwolle oder Leinen, oder Kunstfasergewebe aus Polyester, verwendet. Diese sind in der Regel mit Spannlacken überzogen und/oder beschichtet. Der Begriff "Spannlack" bezeichnet im Sinne der Erfindung bevorzugt einen vorzugsweise klaren Lack, der dazu eingerichtet ist, Bespannmaterial, wie Papier, Vlies und/oder Gewebe, beim Trocknen zu spannen. Darüber hinaus kann der Spannlack eine festigende und/oder imprägnierende Wirkung haben. Der Lack kann beispielsweise folgende Bestandteile umfassen, die ausgewählt sind aus der Gruppe umfassend Bindemittel, Füllstoffe, Pigmente, Lösemittel, Harze, Acrylate und/oder Additive, wobei das Lösungsmittel beispielsweise Aceton oder Methylethylketon (MEK) sein kann. Es ist im Sinne der Erfindung insbesondere bevorzugt, dass der Spannlack dadurch erhalten wird, dass Schießbaumwolle in dem Lösungsmittel aufgelöst wird.

Vor allem in den USA kommen auch non-tautening Nitrate oder non-tautening Butyrate-Lacke zum Einsatz. Der Begriff "non-tautening" bezeichnet dabei bevorzugt nicht-spannende Materialien, also vorzugsweise solche Stoffe, die beim Trocknen keine spannende Wirkung auf ein Bespannungsmaterial ausüben. Diese können beispielsweise Weichmacher umfassen. Es ist im Sinne der Erfindung bevorzugt, dass für die Butyrate vorzugsweise Butansäure für die Veresterung verwendet wird. Beispielsweise können die Butyrate als Lösungsmittel in einem Lack verwendet werden. Insbesondere Spannlack ist allerdings ein zündfähiger Brandbeschleuniger, der etwaigen, bei einem Absturz auftretenden Bränden zur Ausbreitung verhelfen kann und diese gegebenenfalls wesentlich verschlimmert.

Es ist darüber hinaus verbreitet, dass das Holz, aus welchem die Leichtflugzeuge häufig zumindest teilweise bestehen, mit Isoliergrund gegen Fäulnis und/oder Feuchtigkeit beschichtet wird. Sowohl Spannlack, als auch Nitrate-Dope und andere häufig verwendete Isoliergrund-Materialien umfassen üblicherweise aufgestickte (nitrierte) Cellulose. Dabei kann für die "Nitrate-Dope" im Sinne der Erfindung bevorzugt Salpetersäure zum Aufnitrieren und/oder zum Verestern verwendet werden. Durch das Aufsticken mit Hilfe von Nitriersäure entsteht durch eine Veresterung mit dem Endprodukt Schießbaumwolle, beziehungsweise bei einem Stickstoffgehalt von größer als 12,75 % Kollodiumwolle. Der Begriff "Nitriersäure" stellt im Sinne der Erfindung bevorzugt einen Oberbegriff für verschiedene Säuren und Säuregemische dar, die zum Nitrieren des Bespannungsmaterials verwendet werden kann. Die Nitriersäure, die im Kontext der vorliegenden Erfindung verwendet wird, kann beispielsweise Salpetersäure und/oder Schwefelsäure umfassen.

Nachteilig an konventionellen Bespannungsmaterialien und den Chemikalien, mit denen sie behandelt werden, ist, dass diese Produkte in Deutschland zum Teil dem Sprengstoffgesetz unterliegen. Aus Schießbaumwolle wird unter anderem Bergbausprengstoff hergestellt. Auf TNT bezogen, besitzt beispielsweise Schießbaumwolle 147 % der Sprengkraft von TNT. Die Brandtemperatur liegt bei 3100 °C und die Zündgeschwindigkeit bei 6.300 m/s. Schießbaumwolle kann in Methylethylketon (MEK) oder Aceton aufgelöst und als Nitrocellulose auf den Bespannstoff aufgetragen werden, sowie auf die Holzteile als Tiefengrund, wobei es sich üblicherweise um ein mit Eisenpigmenten verdünnten Spannlack handelt, der einen gelblichen Farbton aufweist.

Schlägt ein Flugzeug nach einem Absturz auf dem Erdboden auf, entsteht in fast jedem Fall ein Motorbrand, da Benzin aus den Kraftstoffleitungen oder dem/den Vergaser(n) auf den stark erhitzten Auspuff tropfen kann. Dieser Brand wird im Sinne der Erfindung bevorzugt als Initialbrand bezeichnet, der mit seiner Hitze und Flamme die lackierten Bereiche des Flugzeugs beaufschlagen und dadurch die mit Spannlack imprägnierten Holzteile und/oder die Bespannung in Brand setzen kann. Da die Piloten und Insassen in der Regel verletzt sind, können sie sich häufig nicht selbst aus dem Wrack des Flugzeugs befreien und sind auf externe Hilfe angewiesen. Um über den Initialbrand die mit Spannlack beschichteten Bereiche zu entfachen, bedarf es in der Regel nur weniger Sekunden. Sobald der Spannlack Feuer gefangen hat, kann sich das Feuer schlagartig ausbreiten. Aufgrund der großen Hitzeentwicklung und der hohen Flammtemperatur ist es den Hilfskräften aufgrund des Eigensicherungsgebotes häufig nicht möglich, die Insassen zu retten, selbst unter Verwendung eines Sicherheits-Handfeuerlöschers, da aufgrund des ausgeglichenen Sauerstoffhaushaltes der Nitrocellulose diese in der Lage ist, auch ohne externen Sauerstoff zu brennen. Ähnliche technische Herausforderungen sind im Stand der Technik auch für Hub- oder Tragschrauber bekannt.

Es ist daher Aufgabe der vorliegenden Erfindung, ein Verfahren zur Vermeidung des Ausbreitens von Bränden bei Fluggeräten, wie Leichtflugzeugen oder Hub- oder Tragschrauber, sowie Teilen davon bereitzustellen, das nicht die Nachteile und Mängel des Standes der Technik aufweist und mit dem gleichzeitig die Ausbreitung von Bränden besonders wirksam vermieden werden kann.

### Beschreibung der Erfindung:

Gelöst wird die Aufgabe durch die Merkmale des Anspruchs 1. Vorteilhafte Ausgestaltungen der Erfindung sind in den abhängigen Ansprüchen beschrieben. Erfindungsgemäß ist ein Verfahren zur Vermeidung eines Ausbreitens von Bränden bei Fluggeräten und/oder Teilen davon vorgesehen, das die folgenden Schritte umfasst:
a) Aufbringung eines Brandschutz-Retardents als Beschichtung auf ein Fluggerät und/oder Teilen davon
b) Aufbringung einer Bespannung auf den Brandschutz-Retardent, wobei das Bespannungsmaterial nicht brennbar ist und endotherm brennt.

Es ist im Sinne der Erfindung bevorzugt, wenn es sich bei dem Fluggerät um ein Leichtflugzeug oder ein Hub- und/oder Tragschrauber handelt. In einer bevorzugten Ausführungsform betrifft die Erfindung daher ein Verfahren zur Vermeidung eines Ausbreitens von Bränden bei Leichtflugzeugen und/oder Teilen davon, wobei das Verfahren die folgenden Schritte umfasst:
a) Aufbringung eines Brandschutz-Retardents als Beschichtung auf ein Leichtflugzeug und/oder Teile davon
b) Aufbringung einer Bespannung auf den Brandschutz-Retardent, wobei das Bespannungsmaterial nicht brennbar ist und endotherm brennt.

In einer weiteren Ausführungsform betrifft die Erfindung ein Verfahren zur Vermeidung eines Ausbreitens von Bränden bei Hub- und/oder Tragschraubern, bei dem ein Brandschutz-Retardent auf einen Hub- und/oder Tragschrauber und/oder Teile davon aufgebracht wird, wobei der Brandschutz-Retardent insbesondere als Beschichtung auf den Hub- und/oder Tragschrauber beziehungsweise seine Teile aufgebracht werden kann.

Ein Brandschutz-Retardent ist im Sinne der Erfindung bevorzugt ein Stoff, der eine Ausbreitung von Bränden einschränkt, verlangsamt oder verhindert. Der Brandschutz-Retardent kann im Sinne der Erfindung bevorzugt auch als Brandhemmer oder als Flammschutzmittel bezeichnet werden. Übliche Brandhemmer können beispielsweise eine anorganische Zusammensetzung aufweisen. Anorganische Brandhemmer sind beispielsweise Aluminiumhydroxid, Aluminiumsulfat, Borsäure Magnesiumhydroxid oder Zinkborat. Ferner können Brandhemmer bromiert und/oder chloriert vorliegen. Zum Einsatz kommen darüber hinaus Flammschutzmittel, die eine Organophosphor- und/oder Stickstoff-Basis aufweisen, wobei diese Flammschutzmittel häufig ferner aromatische und/oder aliphatisch Ester der Phosphorsäure umfassen. Darüber hinaus sind Brandhemmer bekannt, die Antimontrioxid umfassen, insbesondere in Kombination mit halogenierten Brandhemmern.

Es ist im Sinne der Erfindung bevorzugt, dass der Brandschutz-Retardent dazu eingerichtet ist, chemisch und/oder physikalisch zu wirken. Eine chemische Wirkung kann beispielsweise darin bestehen, dass durch bei der Pyrolyse eines Materials entstehendes Gas eine Radikalkettenreaktion unterbunden wird. In der Festphase kann eine Schutzschicht aus verkohltem Material aufgebaut werden, die einen Zutritt von Sauerstoff und Wärme verhindert. Der Aufbau einer solchen Schutzschicht wird vorzugsweise als Intumeszenz bezeichnet. Physikalische Wirkungen können beispielsweise darin bestehen, dass ein Material durch eine endotherme Reaktion gekühlt wird. Der Brandhemmer kann beispielsweise auch zu einer Verdünnung der brennbaren Gase durch inerte Substanzen führen. Ferner kann erhitztes Material schmelzen, so dass es aus der Brandzone abfließen und damit nicht mehr an dem Brand teilnehmen kann, da es nicht mehr im Einwirkungsbereich der Flammen vorliegt.

Vorzugsweise kann der vorgeschlagene Brandhemmer additiv und/oder reaktiv wirken. Dazu kann der Brandschutz-Retardent beispielsweise in einen brennbaren Stoff eingearbeitet werden. Es kann aber im Sinne der Erfindung auch bevorzugt sein, dass die brandhemmende Substanz selbst Bestandteil eines gegebenenfalls brennenden Materials ist. Ein inhärenter Brandschutz kann vorzugsweise dadurch erreicht werden, dass ein gegebenenfalls brennendes Material, zum Beispiel das Bespannungsmaterial, selbst flammwidrig ausgebildet ist, d.h. nicht brennbar oder zumindest schwer entzündbar ist. Es ist im Sinne der Erfindung insbesondere auch bevorzugt, dass das Flammschutzmittel als Beschichtung und/oder Coating auf einen zu schützenden Gegenstand, hier vorzugsweise das Fluggerät, aufgebracht wird.

Um ein Fluggerät oder Teile davon besonders wirksam gegen die Ausbreitung von (Initial)Bränden zu schützen, wird vorzugsweise die gesamte Struktur des Fluggeräts vorzugsweise komplett mit dem Brandschutz-Retardent versehen. Mit anderen Worten ist es im Sinne der Erfindung bevorzugt, dass gesamte Fluggerät mit dem Retardenten zu versehen. Es kann aber für einige Anwendungen ebenso bevorzugt sein, beispielsweise nur den vorderen Teil eines Leichtflugzeugs mit dem Retardenten zu versehen, da üblicherweise im vorderen Bereich eines Flugzeugs der Motor angeordnet vorliegt, in dessen Umgebung der brennbare Treibstoff, der zumeist Ursache für einen Initialbrand ist, austreten kann. Es ist insbesondere bevorzugt, den Retardenten in das Bespannungsmaterial einzubringen. Es kann darüber hinaus bevorzugt sein, den Rahmen oder die formgebende Struktur des Fluggeräts oder seiner Teile mit dem Retardenten zu bestreichen.

Es hat sich herausgestellt, dass beispielsweise Ammoniumpolyphosphat als Retardent besonders geeignet ist. Mit anderen Worten ist es besonders bevorzugt, dass der Brandschutz-Retardent Ammoniumpolyphosphat umfasst. Im Sinne der Erfindung ist Ammoniumpolyphosphat bevorzugt ein Ammoniumsalz der Phosphorsäure. Tests haben gezeigt, dass Brandhemmer umfassend Ammoniumpolyphosphat vor allem in Kombination mit Bespannungsmaterialen, die als Polyestergewebe ausgebebildet sind, besonders wirksam die Ausbreitung von Bränden verhindern. Der kombinierte Einsatz von Brandhemmer umfassend Ammoniumpolyphosphat mit Bespannungsmaterialen, die beispielsweise Polyester umfassen können, im Bereich der Luftfahrt zur Eindämmung vom Bränden bei Fluggeräten stellt eine Abkehr vom Stand der Technik dar, da die Fachwelt bisher davon ausgegangen war, dass Brandhemmer mit Ammoniumpolyphosphat insbesondere in Verbindung mit Holz-Grundmaterialien eingesetzt werden können. Es war daher vollkommen überraschend, dass die die Verwendung des Brandschutz-Retardenten umfassend Ammoniumpolyphosphat die Ausbreitung von Bränden in der Luftfahrt so wirksam einschränkt, wie dies in Tests gezeigt werden konnte.

In Frage kommen darüber hinaus Verbindungen, die Halogene umfassen. Allerdings können Retardenten auf Halogenbasis zu Vergiftungserscheinungen bei den Flugzeuginsassen oder den umstehenden Personen führen, so dass das nicht-toxische Ammoniumpolyphosphat zur Verwendung als Retardent besonders bevorzugt ist. Es hat sich gezeigt, dass Ammoniumpolyphosphat besonders wirksam Initialbrände eingrenzt und/oder diese abdeckt. Dies wird vorteilhafterweise dadurch ermöglicht, dass das Ammoniumpolyphosphat Schaum bildet, durch den eine Abgrenzung beziehungsweise Eingrenzung des Initialbrands erfolgen kann. Dadurch wird eine räumliche Trennung hervorgerufen, die vorteilhafterweise zu einer Temperaturherabsetzung führt, so dass der Initialbrand daran gehindert wird, sich (weiter) auszubreiten. Vorzugsweise kann die Effizienz von konventionellen Brandhemmern durch die Zugabe von Ammoniumpolyphosphat wesentlichen gesteigert werden. Insbesondere bei Kombination von halogenierten und Ammoniumpolyphosphat aufweisenden Flammschutzmitteln können synergistische Wirkeffekte bei der Brandeindämmung erzielt werden, die aufgrund der Wirkungen der einzelnen Bestandteile des Brandschutz-Retardenten zu nicht erwarten gewesen waren.

Die Bespannung wird anschließend auf dem Retardent aufgebracht und verarbeitet. Tests haben gezeigt, dass die Anbringung der Bespannung auf den Retardenten eine besonders wirksame Eindämmung von Initialbränden bei Leichtflugzeugen oder Hub- und Tragschraubern gewährleistet. Das Bespannungsmaterial ist nicht brennbar ausgebildet. Ein Bespannungsmaterial ist im Sinne der Erfindung bevorzugt dann nicht brennbar, wenn eine Probe des Bespannungsmaterials einen vertikalen Entzündungstest besteht. Dies kann beispielsweise dann der Fall sein, wenn ein Material, auch bei häufiger Wiederholung eines Entzündungstests, nicht anfängt zu brennen oder einen sehr späten Zündungszeitpunkt aufweist. Bei einem vertikalen Entzündungstest wird beispielsweise eine Flamme für 10 Sekunden auf eine Probe des Bespannungsmaterials angewendet, wobei die Probe vorzugsweise vertikal auf einem Halterahmen angebracht vorliegt. Der Brenner, der die Flamme erzeugt, kann beispielsweise horizontal auf Höhe der Probe oder in einem 30°-Winkel unter die Probe gehalten werden. Diese beiden Testvarianten werden im Sinne der Erfindung bevorzugt als Oberflächenentzündung und als Entzündung der unteren Kante bezeichnet.

Beispielsweise kann ein Polyestergewebe beziehungsweise ein Polyesterspanngewebe mit Farbbeschichtung, das beispielsweise von dem Unternehmen Lanitz-Prena Folien Factory GmbH unter der Marke ORATEX® vertrieben wird, als Bespannmaterial eingesetzt werden. Die Begriffe Bespannungsmaterial und Bespannmaterial werden im Sinne der Erfindung bevorzugt synonym verwendet.

Die Strukturen, aus denen die Fluggeräte aufgebaut sein können, sind sehr verschieden und bestehen aus so unterschiedlichen Materialien wie beispielsweise Aluminium, Stahl, Holz, Glasfaserkunststoff oder kohlenstofffaserverstärkter Kunststoff. Dementsprechend sind auch die Verarbeitungsbedingungen wie zum Beispiel die Temperatur für das verwendete Bespannmaterial sehr verschieden. Teile eines Leichtflugzeugs sind beispielsweise dessen Tragflächen, Leitwerke, Nasenholme, Endholme, Hauptholme, Ruderholme, Rippen, Querruder oder der Rumpf. Bevorzugt ist insbesondere die Verwendung von luftundurchlässigem Bespannmaterial, da dies zu besonders vorteilhaften Eigenschaften während des Fliegens führt.

Das Bespannungsmaterial, das im Sinne der Erfindung verwendet wird, verbrennt endotherm, das heißt bei der Verbrennung des Bespannungsmaterials wird vorzugsweise keine Energie erzeugt, sondern es muss Energie von außen zugeführt werden. Dadurch erlischt das Feuer und/oder der Initialbrand vorteilhafterweise, sobald ein eventuell auf dem Fluggerät oder seinen Bestandteilen aufgebrachter Brandbeschleuniger, zum Beispiel Spannlack, non-tautening Nitrate, non-tautening Butyrate-Lacke, Schießbaumwolle und/oder Kollodiumwolle, verbrannt beziehungsweise abgebrannt ist. Dadurch kann überraschenderweise die Bespannung des Flugzeugs nur im direkten Bereich des Initialbrandes durchbrennen, so dass ein Ausbreiten des Feuers wirksam verhindert wird, weil der Brand der Bespannung verlöscht. Es ist im Sinne der Erfindung bevorzugt, dass das Bespannungsmaterial in Verbindung mit dem Brandhemmer endotherm verbrennt. Dadurch wird vorteilhafterweise eine Kühlung des Materials erreicht und dem Material Energie entzogen. Durch die Verwendung eines endotherm verbrennenden Bespannungsmaterials wird somit ein wesentlicher Beitrag zur Bekämpfung einer Brandausbreitung geleistet.

Insbesondere werden durch die Verwendung eines endotherm verbrennenden Bespannungsmaterials die Zeiten verlängert, die den Piloten und/oder den Insassen eines abgestürzten Fluggeräts zur Verfügung stehen, um sich selbsttätig aus dem Fluggerät zu befreien, so sie dazu in der Lage und nicht durch Verletzungen daran gehindert sind. Ebenso verlängert sich die Zeit für Rettungskräfte, um zum Ort des Absturzes zu gelangen und den Piloten und/oder den Insassen des Flugzeugs zu helfen und diese gegebenenfalls aus dem - brennenden - Fluggerät zu befreien. Dadurch können Menschenleben gerettet oder das Ausmaß an Brandverletzungen reduziert werden, wobei gerade bei Brandverletzungen bekannt ist, dass der Anteil der verbrannten Hautfläche des Betroffenen einen wesentlichen Faktor für die Überlebenschancen des Verletzten darstellt. Insofern erhöht die Anwendung des vorgeschlagenen Verfahrens die Überlebenschancen der Betroffenen erheblich, indem ihnen mehr Zeit verschafft wird, sich zu retten, beziehungsweise der Anteil an verbrannter Haut durch eine zügige Rettungsermöglichung wesentlich reduziert wird.

In einer bevorzugten Ausführungsform der Erfindung umfasst das Verfahren folgenden zusätzlichen Schritt:
- Leeren eines Kraftstoffbehälters durch Betätigen eines Notablasses.

Dabei ist es insbesondere bevorzugt, dass das Betätigen eines Notablasses durch ein manuelles Auslösen erfolgt. Es ist demnach im Sinne der Erfindung vorgesehen, dass Fluggeräte, bei denen das vorgeschlagene Verfahren umgesetzt wird, einen Notablass für einen Kraftstoffbehälter umfassen, der im Gefahrenfall dazu verwendet werden kann, den Kraftstoffbehälter des Fluggeräts zu entleeren. Es ist im Sinne der Erfindung bevorzugt, dass der Kraftstoffbehälter auch als Tank bezeichnet wird. Vorteilhafterweise wird durch das Betätigen des Notablasses bewirkt, dass der Inhalt des Kraftstoffbehälters aus diesem entfernt wird, so dass der Kraftstoffbehälter nach Durchführung dieses zusätzlichen Verfahrensschritts bevorzugt vollständig entleert vorliegt. Dadurch wird vorteilhafterweise erreicht, dass ein Feuer keine zusätzliche "Nahrung" findet, wenn das Fluggerät auf dem Boden aufschlägt und Feuer fängt. Durch das Leeren des Kraftstoffbehälters durch bevorzugt manuelles Betätigen eines Notablasses wird das vorgeschlagene Brandschutzverfahren um einen Schritt erweitert, der die Ausbreitung eines Brandes zusätzlich erschwert und somit die Zeit, die für die Rettung von Pilot und/oder Insassen des Leichtflugzeugs zur Verfügung steht, erheblich verlängert. Dieser Schritt stellt eine Abkehr von Stand der Technik dar, da die Fachwelt bisher davon ausgegangen war, dass ein Notablass insbesondere im Bereich des Leichtflugzeugbaus nicht erforderlich sei.

Es ist im Sinne der Erfindung darüber hinaus bevorzugt, dass das Verfahren den weiteren Schritt umfasst:
- Öffnen einer Zuluftöffnung des Kraftstoffbehälters zum Einlass von Frischluft.

Dieser Schritt erfolgt bevorzugt gleichzeitig mit dem Leeren des Kraftstoffbehälters, damit eine schnelle Entleerung des Tanks gewährleistet werden kann und die Durchflutung mit Luft den Tank so weit wie möglich von Benzinanhaftungen befreit. Dadurch wird die Explosionsgefahr der Gase im Tank durch mögliche entstehende Funken beim Aufschlag erheblich reduziert oder ausgeschlossen. Das Öffnen der Zuluftöffnung eines Kraftstoffbehälters kann vorteilhafterweise durch den Fahrtwind unterstützt und/oder verstärkt werden.

Durch das Leeren des Kraftstoffbehälters und/oder das Öffnen einer Zuluftöffnung des Kraftstoffbehälters wird zusammen mit den übrigen Verfahrensschritten die Erfindungsidee verwirklicht, eine wirksame Eindämmung eines Brandes im Bereich eines Fluggeräts zu erreichen und den betroffenen Personen mehr Zeit zu verschaffen, sich zu retten. Tests haben gezeigt, dass die einzelnen Verfahrensschritte vorteilhafterweise so ineinandergreifen, dass überraschende Ergebnisse bei der Vermeidung einer Ausbreitung von Bränden beobachtet wird. Insbesondere geht die Gesamtwirkung, wenn die Verfahrensschritte im Kontext des vorgeschlagenen Verfahrens gemeinsam durchgeführt werden, über die Summe der Einzelwirkungen der einzelnen Maßnahmen hinaus. Die Einbeziehung des Kraftstoffbehälters und die Steuerung seines Füllstandes können daher einen Beitrag zu einer weiter verbesserten Eindämmung von Bränden bei abgestürzten Fluggeräten leisten.

Es ist im Sinne der Erfindung, dass das vorgeschlagene Verfahren auch bei Hubschraubern oder Tragschraubern angewendet werden kann. Insbesondere ist das Verfahren zur Anwendung bei ultra-leicht Hub- und Tragschraubern geeignet. Es ist insbesondere bevorzugt, den vorgeschlagenen Retardenten in Zusammenhang mit dem Kraftstoff-Notablass verwenden, wobei der Retardent insbesondere beidseitig auf den Hub- und/oder Tragschrauber oder Teilen davon aufgebracht wird. Dadurch wird vorteilhafterweise ein Übergreifen eines möglichen Motorbrandes auf die Zelle beziehungsweise den Passagierbereich verhindert. Der Retardent erhöht vorteilhafterweise den Feuerwiderstand der Firewall beziehungsweise der Trennwand zwischen Motorraum des Hub- und/oder Tragschraubers und der Kabine, so dass der unvermeidbar abbrennende Kraftstoff nicht in der Lage ist, sich weiter auszubreiten. Dadurch bleibt der Brand vorteilhafterweise auf den Motorraumbereich beschränkt, wo der Kraftstoff abbrennen kann, ohne dass sich der Brand weiter ausbreitet. Es ist im Sinne der Erfindung bevorzugt, den Tank mit Hilfe des Notablasses zu entleeren und zu belüften, damit im Falle einer Tankbeschädigung kein Kraftstoff mehr austreten kann.

Es ist im Sinne der Erfindung insbesondere bevorzugt, dass die Beschichtung des Fluggeräts und/oder seiner Bestandteile keine Materialien umfasst, die ausgewählt sind aus einer Gruppe umfassend Spannlack, non-tautening Nitrate und/oder non-tautening Butyrate-Lacke. Dadurch stellt die Erfindung eine Abkehr vom Stand der Technik dar, in dem auf die genannten Materialien zur Bespannung und/oder Beschichtung eines Fluggeräts oder seiner Bestandteile gerade verzichtet wird. Es ist im Sinne der Erfindung ebenso bevorzugt, dass bei der Herstellung der Bespannung und/oder der Beschichtung des Fluggeräts auf Schießbaumwolle und/oder Kollodiumwolle verzichtet wird, da diese beispielsweise als Sprengstoffe dienen können und somit eine wesentliche Gefahrenquelle für Piloten, Insassen, Rettungskräfte und übrige Beteiligte, beispielsweise Besucher einer Luftfahrtschau, darstellen können. Mit anderen Worten ist es im Sinne der Erfindung bevorzugt, dass die Bespannung und/oder die Beschichtung des Fluggeräts keine Schießbaumwolle und keine Kollodiumwolle umfasst.

Es ist in einer Ausgestaltung der Erfindung bevorzugt, dass die Beschichtung durch mindestens einen Aufbringungsvorgang erfolgt. Dies erfolgt bevorzugt durch ein- oder zweimaliges Auftragen des Retardents, wobei es insbesondere bevorzugt ist, den Retardent auf die Struktur des Fluggeräts aufzustreichen und/oder aufzuspritzen. Mit anderen Worten ist es im Sinne der Erfindung bevorzugt, dass die Aufbringung des Brandschutz-Retardents durch Aufstreichen und/oder Aufspritzen erfolgt. Es ist im Sinne der Erfindung bevorzugt, dass die Beschichtung homogen und/oder mit gleichmäßiger Schichtdicke erfolgt. Bei gleichförmig dicken Auftrag kann eine einmalige Beschichtung ausreichen, um einen ausreichenden Auftrag des Retardents auf das Fluggerät oder seiner Bestandteile zu gewährleisten. Insbesondere bei inhomogenen ersten Beschichtungen mit variierender Schichtstärke ist im Sinne der Erfindung eine mindestens zweimalige Beschichtung bevorzugt, um an allen Stellen des Fluggeräts oder seiner Bestandteile genügend Retardent aufzubringen. Der Retardent wird vorzugsweise als Ersatz des Isoliergrundes aufgetragen und als Brandschutzbeschichtungsmasse eingesetzt.

Um eine Weiterverarbeitung auf diesem Retardent auch bei hohen Temperaturen zu ermöglichen, ist der Retardent in einer bevorzugten Ausgestaltung der Erfindung zweikomponentig ausgelegt, sodass er vorteilhafterweise vernetzt. Es ist im Sinne der Erfindung insbesondere bevorzugt, dass ein Bindemittel für den Retardent ein zweikomponentiges Bindemittel umfasst, das im Sinne der Erfindung bevorzugt als 2K-Bindemittel bezeichnet wird. Vorzugsweise ermöglicht das 2K-Bindemittel eine Vernetzung, das zu einer verbesserten Temperaturbeständigkeit des Retardents beiträgt. Es ist insbesondere bevorzugt, dass das 2K-Bindemittel nicht zu brennen beginnt, bevor der Retardent wirkt.

Mit anderen Worten ist der Retardent in einer weiteren bevorzugten Ausgestaltung der Erfindung dazu eingerichtet, zu vernetzen. Eine Vernetzung kann beispielsweise durch eine Polymerisierung des Materials erfolgen, wodurch vorzugsweise eine besonders temperaturstabile Verbindung gewährleistet wird. Die Bespannung wird dann bevorzugt auf dem vorzugsweise vernetzten Retardent aufgebracht.

Um eine Ausbreitung eines Initialbrandes und/oder eines sonstigen Feuers einzudämmen, können beispielsweise auch lackierte Metallstrukturen eines Fluggeräts, sowie Bereiche der Firewall und ihrer näheren Umgebung mit dem Retardent beschichtet werden, um eine Brandverzögerung zu erreichen und die Rettungszeiten zu verlängern. Das gleiche gilt beispielsweise auch für Kunststoff-Flugzeuge, bei denen es ebenfalls häufig zu brandbedingten Personenschäden, beispielsweise bei Flugzeugabstürzen, kommt. Kunststoff-Flugzeuge können beispielsweise aus glasfaser- oder kohlenstofffaserverstärkten Kunststoff gefertigt sein.

In einer bevorzugten Ausführungsform der Erfindung ist eine Patrone umfassend eine Gasfüllung vorgesehen, wobei die Patrone vorzugsweise entleerbar ist. Es ist im Sinne der Erfindung besonders bevorzugt, dass der bevorzugt gasförmige Inhalt der Patrone dazu eingerichtet ist, einen Inhalt eines Tanks eines Fluggeräts leerzublasen. Ferner kann die Gasfüllung dazu eingerichtet sein, einen Brand selbst zu löschen. Im gefüllten Zustand ist in der Patrone vorzugsweise ein inertisierendes Gas oder Gasgemisch enthalten, mit dem der Inhalt des Tanks leergeblasen werden kann. Es kann im Sinne der Erfindung auch bevorzugt sein, dass mit dem inertisierenden Gas oder Gasgemisch ein bestehender Brand gelöscht wird, indem die Sauerstoffzufuhr, die für das Weiterbrennen eines Feuers erforderlich ist, abgeschnitten und/oder unterbunden wird. Bei dem inertisierenden Gas oder Gasgemisch kann es sich beispielsweise um Stickstoff (N₂) handeln, wobei Stickstoff nachteiligerweise gekühlt werden muss. Bevorzugt ist die Patrone daher mit Kohlenstoffdioxid (CO₂) gefüllt, welches nicht gekühlt werden muss. Das Gas oder Gasgemisch kann auch Edelgase oder Mischungen von Edelgasen umfassen.

Es ist im Sinne der Erfindung bevorzugt, die Patrone manuell oder mit Hilfe eines Bautenzugs zu öffnen. Es ist im Sinne der Erfindung ganz besonders bevorzugt, dass das Gas oder das Gasgemisch bei Normaldruck ein größeres Volumen einnimmt als der Tank des Fluggeräts, das heißt vorzugsweise des Leichtflugzeugs oder des Hubschraubers. Es kann im Sinne der Erfindung auch bevorzugt sein, dass die Patrone im gefüllten Zustand unter Druck steht, um eine besonders große Gasmenge in der Patrone unterzubringen, so dass die Gasmenge ausreicht, um den bevorzugt kompletten Inhalt des Tanks zu verdrängen. Es ist insbesondere bevorzugt, dass das inertisierende Gas oder Gasgemisch dazu beiträgt, einen möglichen Brand beziehungsweise dessen Sauerstoffversorgung zu unterbinden. Es ist daher besonders bevorzugt, dass in der Gaspatrone kein Sauerstoff enthalten ist und dass insbesondere keine zusätzliche Luftzufuhr im Bereich des Tanks des Fluggeräts und des Tankinhalts erfolgt, da dadurch ein bestehendes Feuer zusätzlich genährt würde.

In Zusammenhang mit der vorliegenden Erfindung wird ein Brandschutz-Retardent zur Verwendung in der Luftfahrt offenbart, der vorzugsweise Ammoniumpolyphosphat umfasst. Die zuvor für das Verfahren beschriebenen Definitionen, technischen Wirkungen und überraschenden Vorteile gelten analog. Es ist insbesondere bevorzugt, den vorgeschlagenen Brandschutz-Retardenten in Verbindung mit Bespannungsmaterialien für Fluggeräte zu verwenden, wobei das Bespannungsmaterial Polyester umfasst oder aus einem Polyestergewebe gebildet ist. Es wird im Kontext der vorliegenden Erfindung ferner ein Schichtaufbau offenbart, wobei der Schichtaufbau vorzugsweise eine Bespannung und/oder ein Bespannungsmaterial, sowie einen vorgeschlagenen Brandschutz-Retardenten umfasst. Es ist im Sinne der Erfindung insbesondere bevorzugt, dass die Bespannung und/oder das Bespannungsmaterial auf den auf den Brandschutz-Retardenten aufgebracht wird, wobei der Brandhemmer vorzugsweise auf einem Fluggerät oder Bestandteilen eines Fluggeräts vorliegt. Der Schichtaufbau kann somit in einer beispielhaften Ausführungsform ein Bestandteil eines Fluggeräts umfassen, sowie einen Brandschutz-Retardenten und eine Bespannung und/oder ein Bespannungsmaterial, wobei der Brandschutz-Retardent auf dem Fluggeräts-Bestandteil aufgebracht vorliegt und die Bespannung und/oder das Bespannungsmaterial auf dem Brandschutz-Retardenten aufgebracht vorliegt. Vorzugsweise ist das Bespannungsmaterial luftundurchlässig ausgebildet.

Die Erfindung wird anhand durch die nachfolgende Figur näher beschrieben; es zeigt:

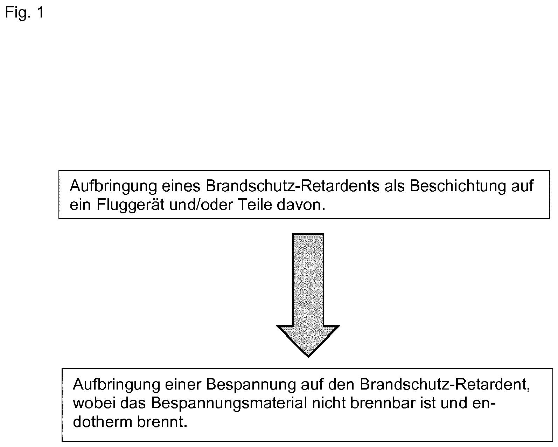

- Figur 1: Darstellung einer bevorzugten Ausführungsform des Verfahrens zur Vermeidung des Ausbreitens von Bränden bei Fluggeräten, wie Leichtflugzeugen oder Hub- und/oder Tragschraubern.

## Patentansprüche

1. Verfahren zur Vermeidung eines Ausbreitens von Bränden bei Fluggeräten und/oder Teilen davon
**umfassend die folgenden Schritte:**
a) Aufbringung eines Brandschutz-Retardents als Beschichtung auf ein Fluggerät und/oder Teilen davon,
b) Aufbringung einer Bespannung auf den Brandschutz-Retardent, wobei das Bespannungsmaterial nicht brennbar ist und endotherm brennt.

2. Verfahren nach Anspruch 1, wobei
das Fluggerät ein Leichtflugzeug, ein Hub- oder ein Tragschrauber ist.

3. Verfahren nach Anspruch 1 oder 2, wobei
das Verfahren folgenden zusätzlichen Schritt umfasst:
- Leeren eines Kraftstoffbehälters durch Betätigen eines Notablasses.

4. Verfahren nach Anspruch 3, wobei
das Verfahren den weiteren Schritt umfasst:
- Öffnen einer Zuluftöffnung des Kraftstoffbehälters zum Einlass von Frischluft.

5. Verfahren nach einem oder mehreren der vorhergehenden Ansprüche
**dadurch gekennzeichnet, dass**
das Betätigen eines Notablasses durch ein manuelles Auslösen erfolgt.

6. Verfahren nach einem oder mehreren der vorhergehenden Ansprüche
**dadurch gekennzeichnet, dass**
der Brandschutz-Retardent zweikomponentig ausgebildet ist.

7. Verfahren nach einem oder mehreren der vorhergehenden Ansprüche
**dadurch gekennzeichnet, dass**
der Brandschutz-Retardent dazu eingerichtet ist, zu vernetzen.

8. Verfahren nach einem oder mehreren der vorhergehenden Ansprüche
**dadurch gekennzeichnet, dass**
die Bespannung auf den vernetzten Brandschutz-Retardent aufgebracht wird.

9. Verfahren nach einem oder mehreren der vorhergehenden Ansprüche
**dadurch gekennzeichnet, dass**
der Brandschutz-Retardent Ammoniumpolyphosphat umfasst.

10. Verfahren nach einem oder mehreren der vorhergehenden Ansprüche
**dadurch gekennzeichnet, dass**
der Brandschutz-Retardent als Brandschutzbeschichtungsmasse eingesetzt wird.

11. Verfahren nach einem oder mehreren der vorhergehenden Ansprüche
**dadurch gekennzeichnet, dass**
die Aufbringung des Brandschutz-Retardents durch Aufstreichen und/oder Aufspritzen erfolgt.

12. Verfahren nach einem oder mehreren der vorhergehenden Ansprüche
**dadurch gekennzeichnet, dass**
die Beschichtung homogen mit gleichmäßiger Schichtdicke erfolgt.

13. Verfahren nach einem oder mehreren der vorhergehenden Ansprüche
**dadurch gekennzeichnet, dass**
das Bespannungsmaterial luftundurchlässig ist.

14. Verfahren nach einem oder mehreren der vorhergehenden Ansprüche
**dadurch gekennzeichnet, dass**
die Beschichtung keine Materialien umfasst, die ausgewählt sind aus einer Gruppe umfassend Spannlack, non-tautening Nitrate und/oder non-tautening Butyrate-Lacke.

15. Verfahren nach einem oder mehreren der vorhergehenden Ansprüche
**dadurch gekennzeichnet, dass**
die Bespannung und/oder die Beschichtung des Fluggeräts keine Schießbaumwolle und keine Kollodiumwolle umfasst.
